# EUROPÄISCHE PATENTSCHRIFT

(11) **EP 1 457 703 B1**
(45) Veröffentlichungstag und Bekanntmachung des Hinweises auf die Patenterteilung: **30.07.2008**
(21) Anmeldenummer: 04005204.5
(22) Anmeldetag: 04.03.2004
(51) Int. Cl.: F16D 69/02, C04B 35/83, C04B 35/573

(54) **Faserverstärkter Keramik-Werkstoff**
Fiber reinforced ceramic composite material
Matériau composite céramique renforcé par des fibres

(30) Priorität: 13.03.2003 DE 10310945
(43) Veröffentlichungstag der Anmeldung: 15.09.2004
(73) Patentinhaber: AUDI AG, 85045 Ingolstadt (DE)
(72) Erfinder: Hüner, Ronald, 86674 Baar (DE)
(74) Vertreter: Deckers, Hellmuth Alexander

(56) Entgegenhaltungen:
- EP-A- 1 273 818
- EP-A- 1 319 640
- EP-A- 1 386 896
- DE-C- 10 148 659

## Beschreibung

Die Erfindung betrifft faserverstärkte Keramikwerkstoffe, die als Material für Bremsbeläge in Kombination mit Bremsscheiben mit keramischen Reibschichten geeignet sind.

Organisch gebundene Bremsbeläge, die in Kombination mit Bremsscheiben aus Gußeisen angewendet werden, sind wegen der höheren Temperaturen beim Bremsen in Verbindung mit Bremsscheiben mit keramischen Belägen nicht geeignet.

Eine Reibpaarung, in der dasselbe Material für die Beläge wie für die Reibschicht der Bremsscheibe verwendet wird, hat den Nachteil, daß dadurch die Scheibe im gleichen Maß verschleißt wie die Beläge; dies schließt eine Verwendung der Bremsscheibe über die gesamte Betriebsdauer des diese enthaltenden Aggregats aus.

Aus der EP-A 1 013 956 ist eine Bremseinheit bekannt, in der eine Bremsscheibe aus einem Metall-Keramik-Verbundwerkstoff, deren Reibfläche eine Vickers-Härte (HV 0,5) von 1600 bis 2500 aufweisen muß, mit einem Reibbelag mit einem Reibwert von 0,3 bis 0,5 kombiniert wird, und die Befestigungselement und der Bremsscheibentopf aus rostfreiem Material sein müssen.

Demgegenüber besteht die Aufgabe darin, Werkstoffe für Bremsbeläge bereitzustellen, die eine höhere Verschleißfestigkeit auch bei erhöhter Temperatur haben, und die sich nicht negativ auf das Verschleißverhalten der damit kombinierten Bremsscheibe auswirken. Dabei soll das Material der Bremsbeläge im Betrieb einen größeren Verschleiß als die Reibschicht der Scheibe zeigen, und die Zusammensetzung (Matrix, Verstärkungsfasern) soll variabel sein und sich auf den vorgesehenen Verwendungszweck in einfacher Weise anpassen lassen.

Die Aufgabe wird gelöst durch einen faserverstärkten Keramik-Werkstoff, dessen Verstärkungsfasern in mindestens zwei Formen ausgewählt aus Geweben, Kurzfasern und Langfasern vorliegen, wobei die Massenanteile der Fasern in Form von Geweben, Kurzfasern und Langfasern sich verhalten wie 0 bis 35 zu 25 bis 80 zu 0 bis 45, bevorzugt 2 bis 30 zu 30 bis 75 zu 5 bis 40.

Zumindest ein Teil der Verstärkungsfasern, nämlich bevorzugt mindestens 10 % der Masse der Verstärkungsfasern, besonders bevorzugt mindestens 25 %, und insbesondere mindestens 50 %, weist mindestens eine Schutzschicht auf aus Kohlenstoff erzeugt durch Pyrolyse von darauf abgeschiedenen Harzen oder Pechen, Borverbindungen oder Phosphorverbindungen oder Kombinationen hiervon. Die Verstärkungsfasern sind insbesondere Kohlenstoffasern, bevorzugt solche mit mindestens einer Schutzschicht aus Kohlenstoff, erzeugt durch Pyrolyse von darauf abgeschiedenen Harzen oder Pechen, Borverbindungen oder Phosphorverbindungen, Verbindungen, die Bor und Phosphor sowie gegebenenfalls dritte Elemente enthalten, oder Kombinationen hiervon. Derartige beschichtete Kohlenstoffasern werden im folgenden als "konditionierte Fasern" bezeichnet. Es ist weiter bevorzugt, daß die eingesetzten Kurzfasern zu mindestens 50 % konditionierte Fasern sind. Ebenso ist bevorzugt, daß mindestens 50 % der Langfasern konditionierte Fasern sind, wobei der Anteil jeweils der Massenanteil ist. Es können jedoch auch Siliciumcarbidfasern, Siliciumcarbid-Nitrid-Fasern sowie Fasern aus Verbindungen von Silicium, Bor, Kohlenstoff und Stickstoff in beliebigen Verhältnissen eingesetzt werden, die ebenfalls beschichtet sein können.

Als Kurzfasern werden Fasern mit einer Länge von bis zu 5 mm bezeichnet, Langfasern sind Fasern, deren Länge mindestens 5,1 mm beträgt, bevorzugt mindestens 6 mm und insbesondere mindestens 7,5 mm.

Die Matrix der erfindungsgemäßen Werkstoffe enthält im Fall von den sogenannten CFC-Werkstoffen ("carbon fibre reinforced carbon", CFRC) Kohlenstoff, oder bevorzugt carbidische Keramiken, besonders bevorzugt Siliciumcarbid, gegebenenfalls in Mischung mit nicht umgesetztem Kohlenstoff und Silicium. Weiter kann die Matrix anorganische Polymere enthalten, wie beispielsweise Polysilazane, substituierte Polysilazane, deren Substituenten bevorzugt Bor und/oder Phosphor sind.

Bevorzugt enthält die Matrix im Fall von Siliciumcarbidkeramiken Massenanteile von 20 bis 99,8 % SiC, 0,1 bis 40 % Silicium und 0,1 bis 70 % Kohlenstoff. Besonders bevorzugt sind Massenanteile von 25 bis 80 % SiC, 5 bis 25 % Si und 5 bis 65 % C. Weitere Bestandteile können SiO₂ (1 bis 20 %), lamellares Bornitrid (0,5 bis 20 %), Mangansulfid (0,5 bis 20 %) und Metallsilicide (0,5 bis 20 %) sein. In bevorzugter Weise werden die genannten Stoffe in solchen Mengen eingesetzt, daß sich die genannten Massenanteile zu 100 % summieren.
Die Massen von Verstärkungsfasern und Matrix in den erfindungsgemäßen Werkstoffen verhalten sich wie 5 bis 50 zu 95 bis 50, bevorzugt 10 bis 45 zu 90 bis 55; insbesondere 20 bis 40 zu 80 bis 60.

Die Erfindung betrifft auch ein Verfahren zur Herstellung der keramischen Verbundwerkstoffe, wobei eine Formmasse enthaltend Verstärkungsfasern und carbonisierbare Stoffe ausgewählt aus duro- und thermoplastischen Kunststoffen, Harzen und Pechen sowie gegebenenfalls Gewebe von Verstärkungsfasern zu Formkörpern (Grünkörpern) geformt werden. Diese Formung wird bevorzugt durch Pressen vorgenommen. Es ist bevorzugt, daß die Formmasse Verstärkungsfasern in Form von Kurzfasern, Langfasern oder deren Mischungen sowie gegebenenfalls Geweben enthält, wobei der Massenanteil dieser Verstärkungsfasern in der Formmasse 5 bis 50 % beträgt.

Als carbonisierbar werden solche Stoffe bezeichnet, die beim Erhitzen unter Ausschluß von Sauerstoff auf eine Temperatur von ca. 750 bis ca. 1100 °C Kohlenstoff bilden, wobei die Masse des gebildeten Kohlenstoffs mindestens 10 % der Masse des eingesetzten Stoffes beträgt.

Die Grünkörper werden anschließend bei den angegebenen Temperaturen zu porösen faserverstärkten Kohlenstoff-Körpern gebrannt, die direkt als Werkstoffe für Bremsbeläge verwendet werden können. In einer bevorzugten Ausführungsform werden die porösen Kohlenstoff-Körper bei einer Temperatur, die mindestens so hoch ist wie die Schmelztemperatur von Silicium, mit flüssigem Silicium oder einer Silicium enthaltenden Legierung infiltriert, wobei der Kohlenstoff zumindest teilweise zu Siliciumcarbid umgesetzt wird. Geeignete Silicium-haltige Legierungen sind insbesondere Ferrosilicium, Legierungen von Silicium mit anderen Metallen der Eisengruppe, mit Chrom, Molybdän, Titan, Vanadium, Aluminium und Magnesium.

Die Gewebe werden so in den erfindungsgemäßen Werkstoffen orientiert, daß ihre Fläche vorzugsweise parallel zu der mit dem Belag in Kombination stehenden Reibschicht ist. Bevorzugt werden mindestens 20 % der Flächen der Gewebe so ausgerichtet, daß ihre Fläche parallel zu den Reibschichten ist.

Bevorzugt werden die für die Bremsbeläge verwendeten keramischen Verbundwerkstoffe mit einem Oxydationsschutz versehen, d. h. sie werden vor der letzten thermischen Behandlung (Brennen zum porösen Kohlenstoff-Körper oder Infiltrieren mit geschmolzenem Silicium oder einer dieses enthaltenden Legierung) mit einer wäßrigen Lösung eines Salzes oder einer Mischung von Salzen getränkt, die bei erhöhter Temperatur ein Glas bilden. Bevorzugt dafür werden Phosphate, Silicate, Aluminate und/oder Borate von Alkalimetallen, Erdalkalimetallen oder Erdmetallen.

In einer anderen bevorzugten Ausführungsform werden die keramischen Verbundwerkstoffe nach dem Brennen zum porösen Kohlenstoff-Körper oder nach dem Infiltrieren mit geschmolzenem Silicium oder einer dieses enthaltenden Legierung mit Metallen infiltriert, wobei bevorzugt zumindest ein Massenanteil von 1 %, bezogen auf die Masse der Verbundwerkstoffe, als nicht weiter umgesetztes Metall zurückbleibt, das gegebenenfalls bei thermischer Beanspruchung des Belagmaterials mit dem Sauerstoff der Luft unter Bildung von Oxiden oder Mischoxiden gemeinsam mit anderen Bestandteilen des Verbundwerkstoffes reagieren kann und so den oxydativen Angriff auf andere Bestandteile des Verbundwerkstoffs unterdrücken kann. Bevorzugt werden hierbei als Metalle Kupfer, Silber, Aluminium, Titan und die Elemente der Eisengruppe.

Werden Verbundwerkstoffe gemäß diesen bevorzugten Verfahrensweisen hergestellt, so enthält deren Matrix einen Massenanteil von 0,1 bis 25 % an einer aus dem Salz gebildeten Glasphase oder einen Massenanteil von 0,1 bis 20 % der durch Infiltration eingebrachten Metalle.

Es wurde überraschenderweise gefunden, daß durch die Konditionierung der eingesetzten Verstärkungsfasern, insbesondere der Carbonfasern, ein pseudoduktiler Reibkörper aus faserverstärkter Keramik geschaffen wird, der sich dem Tribopartner (hier die mit dem Belag in tribologischer Paarung stehende Reibscheibe) in weit besserer Weise mechanisch anpassen kann und flächig anstatt nur punktuell anliegt. Durch die dadurch vergrößerte Kontaktfläche erhöht sich der Reibwert der Tribopaarung und der Verschleiß durch Abrasion und Tribooxidation vermindert sich beträchtlich. Die Ausbildung von sogenannten "Hot spots" wie im Fall der vorwiegend punktuellen Berührung wird nicht mehr beobachtet.

Die Erfindung wird durch die nachstehenden Beispiele erläutert.

### Beispiel 1

Eine Mischung aus Massenanteilen von 40 % konditionierten Carbonfasern, die jeweils zur Hälfte in Form von Kurzfasern mit einer mittleren Länge von 3 mm und einem Durchmesser von 8 bis 10 µm und von Langfasern mit einer mittleren Länge von 50 mm und einem mittleren Durchmesser von 8 bis 10 µm vorlagen, 20 % Petrolkoks mit einem mittleren Teilchendurchmesser von maximal 45 µm, 30 % einer Phenolharz-Zusammensetzung (Novolak, ®Bakelite SP 222, mit einer B-Zeit nach DIN ISO 8987 A bei 150 °C von 120 s und einem Massenanteil an Hexamethylentetramin von 9 %), 1 % Mangansulfid, 0,5 % lamellarem Bornitridpulver mit einer mittleren Teilchengröße von maximal 45 µm, 1,5 % natürlichem Graphit (Graphitbergbau Kaisersberg, Teilchengröße unter 45 µm) und 7 % Pech (®Carbores, Rütgers, Steinkohlenteerpech mit hoher Kohlenstoffausbeute, Erweichungstemperatur über 220 °C) wurde in einem Mischer innig miteinander vermischt, diese Mischung wurde mit Hilfe einer hydraulischen Presse auf eine Dicke von 20 mm verpreßt und danach in einem Ofen unter Luftabschluß fünf Stunden auf 700 °C erhitzt. Die resultierenden plattenförmigen Formteile wurden gemäß der gewünschten Endkontur bearbeitet, jeweils auf Trägerplatten aus Keramik und Metall aufgebracht und planparallel zur unteren Ebene des Trägers geschliffen.

### Beispiel 2

Eine Mischung aus 45 % konditionierten Carbonfasern, die jeweils zur Hälfte in Form von Kurzfasern mit einer mittleren Länge von 4 mm und einem Durchmesser von 8 bis 10 µm und von Langfasern mit einer mittleren Länge von 50 mm und einem mittleren Durchmesser von 8 bis 10 µm vorlagen, 10 % Petrolkoks mit einer mittleren Korngröße von unter 45 µm), 35 % einer Phenolharz-Zusammensetzung (Novolak, ® Bakelite SP 222, wie oben), 1 % Siliciumcarbidpulver mit einer Korngröße von unter 45 µm, 0,5 % lamellarem Bornitridpulver mit einer Korngröße von unter 45 µm, 3,5 % Graphitpulver (Graphitbergbau Kaisersberg, mit einer Korngröße von unter 45 µm) und 5 % Pech (®Carbores, Rütgers, wie oben) wurden in einem Mischer innig miteinander vermischt und mit Hilfe einer hydraulischen Presse zu Platten mit einer Dicke von 20 mm verpreßt und anschließend in einem Ofen unter Luftabschluß fünf Stunden auf 700 °C erhitzt. Die resultierenden plattenförmigen Formteile wurden gemäß der gewünschten Endkontur bearbeitet, und einer Silicierungsreaktion mit flüssigen Silicium unterworfen, wobei Kohlenstoff partiell zu SiC umgesetzt wurde. Die Platten wurden zunächst einseitig geschliffen und mit der bearbeiteten Seite auf Trägerplatten aus Keramik und Metall aufgebracht und an der freien Fläche planparallel zur unteren Ebene des Trägers geschliffen.

### Beispiel 3

Eine Mischung aus 25 % konditionierten Carbonfasern, die jeweils zur Hälfte in Form von Kurzfasern mit einer mittleren Länge von 4 mm und einem Durchmesser von 8 bis 10 µm und von Langfasern mit einer mittleren Länge von 50 mm und einem mittleren Durchmesser von 8 bis 10 µm vorlagen, 5 % eines Gewebes von konditionierten Carbonfasern mit einem Durchmesser von ca. 8 bis ca. 10 µm, 30 % Petrolkoks (wie in Beispiel 1), 35 % einer Phenolharz-Zusammensetzung (wie in Beispiel 1), 1 % Siliciumcarbidpulver (wie in Beispiel 2), und 4 % Pech (wie in Beispiel 1) wurden in einem Mischer innig miteinander vermischt, und mit Hilfe einer hydraulischen Presse zu Platten mit einer Dicke von 20 mm verpreßt und anschließend in einem Ofen unter Luftabschluß fünf Stunden auf 700 °C erhitzt. Die resultierenden plattenförmigen Formteile wurden zunächst einseitig geschliffen und mit der bearbeiteten Seite auf Trägerplatten aus Keramik und Metall aufgebracht und an der freien Fläche planparallel zur unteren Ebene des Trägers geschliffen. Die erhaltenen Platten wurden gemäß der gewünschten Endkontur bearbeitet, und einer Infiltrierung mit einem Precursor- Polymeren der Formel a) unterzogen, wobei die Infiltrierung unter vermindertem Druck (ca. 10 hPa) bei Temperaturen von ca. 60 bis ca. 80 °C stattfindet. Das Polymer wandelt sich durch die anschließende Erhitzung auf 1000 °C in eine amorphe Keramik um. Die Platten wurden dann auf einer Fläche geschliffen und mit dieser auf Trägerplatten jeweils aus Keramik und Metall aufgebracht, und die unbearbeitete Fläche wurde anschließend planparallel zur Unterseite des Trägers geschliffen.

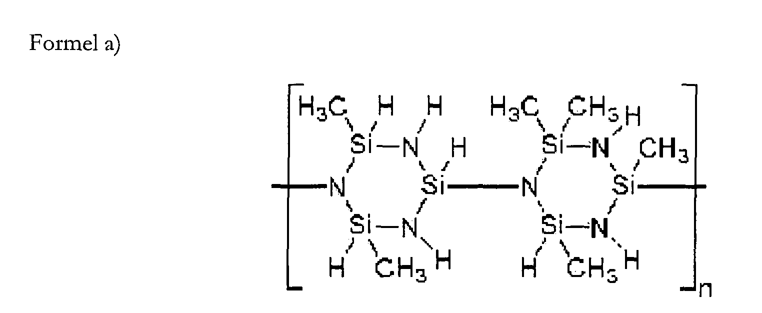

### Beispiel 4

Eine Mischung aus 45 % konditionierten Carbonfasern, die jeweils zur Hälfte in Form von Kurzfasern mit einer mittleren Länge von 4 mm und einem Durchmesser von 8 bis 10 µm und von Langfasern mit einer mittleren Länge von 50 mm und einem mittleren Durchmesser von 8 bis 10 µm vorlagen, 10 % Petrolkoks mit einer mittleren Korngröße von unter 45 µm), 35 % einer Phenolharz-Zusammensetzung (Novolak, ® Bakelite SP 222, wie oben), 1 % Siliciumcarbidpulver mit einer Korngröße von unter 45 µm, 0,5 % lamellarem Bornitridpulver mit einer Korngröße von unter 45 µm, 3,5 % Graphitpulver (Graphitbergbau Kaisersberg, mit einer Korngröße von unter 45 µm) und 5 % Pech (®Carbores, Rütgers, wie oben) wurden in einem Mischer innig miteinander vermischt und mit Hilfe einer hydraulischen Presse zu Platten mit einer Dicke von 20 mm verpreßt und anschließend in einem Ofen unter Luftabschluß fünf Stunden auf 700 °C erhitzt. Die resultierenden plattenförmigen Formteile wurden gemäß der gewünschten Endkontur bearbeitet, und einer Silicierungsreaktion mit flüssigen Silicium unterworfen, wobei Kohlenstoff partiell zu SiC umgesetzt wurde. Die Platten wurden zunächst einseitig geschliffen und mit der bearbeiteten Seite auf Trägerplatten aus Keramik und Metall aufgebracht und an der freien Fläche planparallel zur unteren Ebene des Trägers geschliffen.

## Patentansprüche

1. Faserverstärkter Keramik-Werkstoff, dessen, Verstärkungsfasern in mindestens zwei Formen ausgewählt aus Geweben, Kurzfasern und Langfasern vorliegen, wobei als Kurzfasern Fasern mit einer Länge von bis zu 5 mm und als Langfasern Fasern mit einer Länge mindestens 5,1 mm bezeichnet werden, **dadurch gekennzeichnet, daß** die Massenanteile der Fasern in Form von Geweben, Kurzfasern und Langfasern sich verhalten wie 0 bis 35 zu 25 bis 80 zu 0 bis 45, und daß zumindest ein Teil der Verstärkungsfasern mindestens eine Schutzschicht aufweist aus Kohlenstoff erzeugt durch Pyrolyse von darauf abgeschiedenen Harzen oder Pechen, Borverbindungen oder Phosphorverbindungen oder Kombinationen hiervon.

2. Faserverstärkter Keramik-Werkstoff nach Anspruch 1, **dadurch gekennzeichnet, daß** mindestens 50 % der Masse der Fasern Kohlenstoffasern sind.

3. Faserverstärkter Keramik-Werkstoff nach Anspruch 1, **dadurch gekennzeichnet, daß** die Matrix Kohlenstoff enthält.

4. Faserverstärkter Keramik-Werkstoff nach Anspruch 1, **dadurch gekennzeichnet, daß** die Matrix Siliciumcarbid enthält.

5. Faserverstärkter Keramik-Werkstoff nach Anspruch 4, **dadurch gekennzeichnet, daß** die Matrix Massenanteile von 20 bis 99,8 % SiC, 0,1 bis 40 % Silicium und 0,1 bis 70 % Kohlenstoff enthält.

6. Faserverstärkter Keramik-Werkstoff nach Anspruch 2, **dadurch gekennzeichnet, daß** die Kohlenstoffasern mindestens eine Schutzschicht aufweisen aus Kohlenstoff erzeugt durch Pyrolyse von darauf abgeschiedenen Harzen oder Pechen.

7. Faserverstärkter Keramik-Werkstoff nach Anspruch 1, **dadurch gekennzeichnet, daß** in der Matrix Zusatzstoffe ausgewählt aus SiO₂, Silciumcarbidpulver, lamellarem Bornitrid, Mangansulfid und Metallsiliciden enthalten sind.

8. Faserverstärkter Keramik-Werkstoff nach Anspruch 1, **dadurch gekennzeichnet, daß** die Matrix ein Glas auf Basis von Phosphaten, Silicaten, Aluminaten und/oder Boraten von Alkalimetallen, Erdalkalimetallen oder Erdmetallen enthält.

9. Faserverstärkter Keramik-Werkstoff nach Anspruch 1, **dadurch gekennzeichnet, daß** die Matrix Metalle enthält ausgewählt aus Kupfer, Silber, Aluminium, Titan und den Elementen der Eisengruppe.

10. Verfahren zur Herstellung von faserverstärkten Keramik-Werkstoffen nach Anspruch 1, **dadurch gekennzeichnet, daß** Gewebe aus Verstärkungsfasern mit einer Formmasse, enthaltend Verstärkungsfasern in Form von Kurz- und/oder Langfasern sowie carbonisierbare Stoffe ausgewählt aus thermoplastischen Kunststoffen, Harzen und Pechen zu Formkörpern geformt werden, die durch Erhitzen unter Ausschluß von Sauerstoff auf eine Temperatur von ca. 750 bis ca. 1100 °C zu porösen faserverstärkten Kohlenstoff-Körpern gebrannt werden, und die anschließend gegebenenfalls bei einer Temperatur, die mindestens so hoch ist wie die Schmelztemperatur von Silicium, mit flüssigem Silicium oder einer Silicium enthaltenden Legierung infiltriert werden, wobei der Kohlenstoff zumindest teilweise zu Siliciumcarbid umgesetzt wird.

11. Verwendung von faserverstärkten Keramik-Werkstoffen nach Anspruch 1 als Material für Bremsbeläge.

## Claims

1. A fiber-reinforced ceramic material whose reinforcing fibers are present in at least two forms selected from among woven fabrics, short fibers and long fibers, with the term "short fibers" referring to fibers having a length of up to 5 mm and the term "long fibers" referring to fibers having a length of at least 5.1 mm, wherein the mass ratio of the fibers in the form of woven fabrics, short fibers and long fibers is 0-35:25-80:0-45 and at least part of the reinforcing fibers has at least one protective layer of carbon produced by pyrolysis of resins or pitches, boron compounds or phosphorus compounds or combinations thereof which have been deposited thereon.

2. A fiber-reinforced ceramic material as claimed in claim 1, wherein at least 50% of the mass of the fibers are carbon fibers.

3. A fiber-reinforced ceramic material as claimed in claim 1, wherein the matrix comprises carbon.

4. A fiber-reinforced ceramic material as claimed in claim 1, wherein the matrix comprises silicon carbide.

5. A fiber-reinforced ceramic material as claimed in claim 4, wherein the matrix comprises from 20 to 99.8 % by mass of SiC, from 0.1 to 40% by mass of silicon and from 0.1 to 70% by mass of carbon.

6. A fiber-reinforced ceramic material as claimed in claim 2, wherein the carbon fibers have at least one protective layer of carbon produced by pyrolysis of resins or pitches which have been deposited thereon.

7. A fiber-reinforced ceramic material as claimed in claim 1, wherein additives selected from among SiO₂, silicon carbide powder, lamellar boron nitride, manganese sulfide and metal silicides are present in the matrix.

8. A fiber-reinforced ceramic material as claimed in claim 1, wherein the matrix comprises a glass based on phosphates, silicates, aluminates and/or borates of alkali metals, alkaline earth metals or earth metals.

9. A fiber-reinforced ceramic material as claimed in claim 1, wherein the matrix comprises metals selected from among copper, silver, aluminum, titanium and the elements of the iron group.

10. A process for producing fiber-reinforced ceramic materials as claimed in claim 1, which comprises shaping woven fabrics of reinforcing fibers together with a molding composition comprising reinforcing fibers in the form of short and/or long fibers and carbonizable materials selected from among thermoplastic polymers, resins and pitches to produce shaped bodies which are fired by heating to a temperature of from about 750 to about 1100°C in the absence of oxygen to produce porous fiber-reinforced carbon bodies and, if desired, subsequently infiltrating these with liquid silicon or a silicon-containing alloy at a temperature which is at least as high as the melting point of silicon, resulting in at least part of the carbon being converted into silicon carbide.

11. The use of a fiber-reinforced ceramic material as claimed in claim 1 as material for brake linings.

## Revendications

1. Matériau céramique renforcé par des fibres, dont les fibres de renforcement se présentent au moins sous deux formes choisies parmi les tissus, les fibres courtes et les fibres longues, dans lequel on désigne par fibres courtes des fibres d'une longueur allant jusqu'à 5 mm et par fibres longues des fibres d'une longueur d'au moins 5,1 mm, **caractérisé en ce que** les fractions massiques des fibres sous la forme de tissus, de fibres courtes et de fibres longues est de 0 à 35:25 à 80:0 à 45 et **en ce qu'**au moins une partie des fibres de renforcement présente au moins une couche protectrice de carbone générée par pyrolyse de résines ou de brais, de composés de bore ou de composés de phosphore ou de combinaisons de ceux-ci qui sont déposés par-dessus.

2. Matériau céramique renforcé par des fibres selon la revendication 1, **caractérisé en ce qu'**au moins 50 % de la masse des fibres sont des fibres de carbone.

3. Matériau céramique renforcé par des fibres selon la revendication 1, **caractérisé en ce que** la matrice contient du carbone.

4. Matériau céramique renforcé par des fibres selon la revendication 1, **caractérisé en ce que** la matrice contient du carbure de silicium.

5. Matériau céramique renforcé par des fibres selon la revendication 4, **caractérisé en ce que** la matrice contient des fractions massiques de 20 à 99,8 % de SiC, de 0,1 à 40 % de silicium et de 0,1 à 70 % de carbone.

6. Matériau céramique renforcé par des fibres selon la revendication 2, **caractérisé en ce que** les fibres de carbone présentent au moins une couche protectrice de carbone générée par pyrolyse de résines ou de brais qui sont déposés par-dessus.

7. Matériau céramique renforcé par des fibres selon la revendication 1, **caractérisé en ce que** la matrice contient des additifs choisis parmi le SiO₂, la poudre de carbure de silicium, le nitrure de bore lamellaire, le sulfure de manganèse et des siliciures métalliques.

8. Matériau céramique renforcé par des fibres selon la revendication 1, **caractérisé en ce que** la matrice contient un verre à base de phosphates, de silicates, d'aluminates et/ou de borates de métaux alcalins, de métaux alcalinoterreux ou de métaux terreux.

9. Matériau céramique renforcé par des fibres selon la revendication 1, **caractérisé en ce que** la matrice contient des métaux qui sont choisis parmi le cuivre, l'argent, l'aluminium, le titane et les éléments du groupe du fer.

10. Procédé de fabrication de matériaux céramiques renforcés par des fibres selon la revendication 1, **caractérisé en ce que** l'on moule un tissu constitué de fibres de renforcement avec une masse moulée, contenant des fibres de renforcement sous la forme de fibres courtes et/ou de fibres longues, ainsi que des substances carbonisables choisies parmi les matériaux synthétiques thermoplastiques, les résines ou les brais, pour produire des corps moulés qui sont calcinés par chauffage en l'absence d'oxygène à une température d'environ 750 à environ 1100 °C pour donner des corps de carbone poreux renforcés par des fibres et qui sont ensuite éventuellement infiltrés par du silicium liquide ou par un alliage contenant du silicium à une température qui est au moins aussi élevée que la température de fusion du silicium, le carbone étant au moins partiellement converti en carbure de silicium.

11. Utilisation de matériaux céramiques renforcés par des fibres selon la revendication 1 comme matériaux pour des garnitures de frein.
